Europäisches Patentamt

European Patent Office

Office européen des brevets

(11) Publication number: **0 252 184**

**A1**

(12) # EUROPEAN PATENT APPLICATION

(21) Application number: **86115258.5**

(22) Date of filing: **04.11.86**

(51) Int. Cl.⁴: **G08C 23/00 , H04B 5/00**

(30) Priority: **05.06.86 US 871043**

(43) Date of publication of application:
**13.01.88 Bulletin 88/02**

(84) Designated Contracting States:
**CH DE ES FR GB IT LI NL**

(71) Applicant: **Rockwell International Corporation
600 Grant Street
Pittsburgh Pennsylvania 15219(US)**

(72) Inventor: **Edwards, James F., Jr.
525 N. Gallatin Avenue
Uniontown Pennsylvania 15401(US)**
Inventor: **Painley, Elmer F.
Box 116, R. D. 2
Uniontown Pennsylvania 15401(US)**
Inventor: **Sutherland, Ray
R.D. 1, Box 294-B
Hopwood Pennsylvania 15445(US)**

(74) Representative: **Leiser, Gottfried, Dipl.-Ing. et al
Patentanwälte Prinz, Leiser, Bunke & Partner
Manzingerweg 7
D-8000 München 60(DE)**

(54) **Pit cover meter reader.**

(57) A remote meter reading arrangement in which utility consumption data accumulated in a meter which is located within an underground enclosure is transmitted to a data storage means in a mobile receptacle carried by an individual. The data is transmitted by way of an inductive coupling one coil of which is located in the enclosure cover and electrically connected to the data storage means in the meter, the other coil of the inductive coupling being located on the end of an extension rod carried by the individual and electrically connected to the data storage means in the mobile receptacle.

FIG. 1

## PIT COVER METER READER

### Field of the Invention

This invention relates to the reading of utility meters which are located outside of the residence in pits below the surface of the ground.

### Background and Description of the Prior Art

A long standing problem in the utility industry is the economic reading of utility meters without inconvenience to the home owner. The problem is especially acute in connection with the reading of water meters. In those areas which are subject to freezing temperatures it has in the past been necessary to install the meters within the residence to prevent damage to the meter when the water within it freezes. However, the reading of such meter installations presents a number of problems in that it may cause inconvenience to the homeowner, or the homeowner may be absent at the time the individual taking meter readings is making his rounds making it necessary to subsequently revisit such residences, or delay taking the reading until the next regularly scheduled visit or request the homeowner to take the reading visually and send it to the utility on forms provided by the utility.

One solution to these problems utilized in the past was to provide a remote register which is located outside of the residence preferably on an exterior wall of the residence, the register then being electrically connected to a device on the meter within the residence which produces pulses or other electrical signals representative of the volumetric flow of water through the meter. An example of such an installation is the system shown in U. S. Patent No. 3,228,244 to Weinberger et al.

Another approach to the problem has been to provide the meter within the residence with an encoded register with storage means in which data representative of volumetric flow through the meter is accumulated. The output from the encoded register is then connected to a receptacle located outside of the building. A readout device is carried by the person taking the reading and by plugging the readout device into the receptacle thereby connecting the readout device with the output of the encoded register so that the data stored in the register is downloaded into the readout device. Such a system is shown in the U. S. Patent No. 3,806,904 to Weinberger et al.

An improvement in the means of transferring the register data from the register to the readout device is disclosed in a co-pending application for U. S. Patent of Felix M. Sciulli Serial No. 505,032 filed June 30, 1983. In the arrangement shown there a coil located within a stationary sealed sensor housing is located on the exterior of the building and is electrically connected to the output of an encoded register located at the meter within the building. The individual taking the reading is equipped with a portable sensor comprised of a second coil located within the portable sealed sensor housing, the second coil being connected to an interrogator/storage unit which is carried by the individual. In order to read the meter the portable sensing unit is brought into close proximity with the sensor unit on the building so as to inductively couple the two coils in the manner of a transformer. An interrogation signal is sent by the portable interrogator/storage unit through the inductively coupled coils to the encoded register at the meter, which in response to the interrogation signal transmits the data accumulated by the encoder through the inductive coupling into the portable interrogator/storage unit.

The system described immediately above has the advantage of economical and error-free recording of data accumulated by the meter encoder. In some areas however, the entire meter is located outside of the residence within a pit below the surface of the ground. In such cases it is current practice to locate the meter sensor unit on the meter itself which of course is below the level of the ground within the pit. To read the meter the individual taking the reading is equipped with an interrogator/storage unit and a portable sensor as described above but which in such cases would be located at the end of an extension rod. The individual taking the reading then removes the pit cover and extends the portable sensor into the pit until it is in close enough proximity with the sensor on the meter to establish an inductive coupling between the two coils located respectively within the meter sensor and the portable sensor. Such an arrangement is shown in Bulletin W-1500 published by the Municipal and Control Division of the Rockwell International Corporation.

While such an arrangement makes it relatively convenient to read the meter within the pit it is nevertheless subject to several disadvantages. The individual taking the meter reading must of course first remove the pit cover. Often times the cover may be difficult to remove having been frozen in place or otherwise made difficult of removal. Also, often times in low lying areas or in moist climate the pits may become inundated with water making it difficult to get a reading. In order to avoid these difficulties Applicants have devised an arrangement in which the meter sensor is located in the cover of the pit and is electrically connected to the encoder on the meter. This enables the individual taking the meter reading to bring the portable sensor into close proximity with the meter sensor on the pit cover without necessity of opening the pit cover.

Summary of the Invention

In order to eliminate the problems inherent in the prior art pit meter installations described above, Applicants have devised a meter reading system in which the meter sensor is located in the cover of the pit in which the meter itself is installed. The individual performing the reading operation then carries a portable interrogator/storage unit and the portable sensor is located at the end of an extension rod. The portable interrogator sensor then is brought into close proximity to the meter sensor located on the pit cover in order to achieve an inductive coupling between the two coils located respectively in the two sensors whereby data accumulated in the encoded register at the meter may be transmitted from the register via the two sensors into the interrogator/storage unit where it is stored until downloaded by equipment installed at the utilities premises.

Description of the Drawings

Figure 1 shows a pit meter installation with the meter sensor located in the removable pit cover and showing the individual taking a meter reading.

Figure 2 shows the detail of the meter sensor which is located in the pit cover.

Description of the Preferred Embodiment

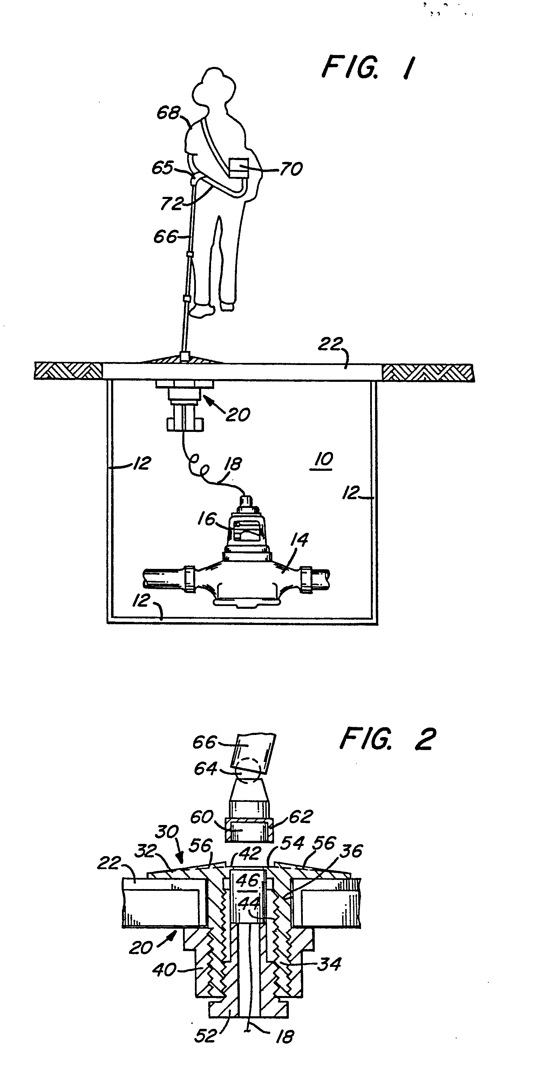

Referring to the drawings, Figure 1 shows an underground chamber or pit 10 the walls and floor 12 of which are formed of some suitable material such as masonry. At the bottom of the pit a water meter 14 is installed together with an encoded register 16 driven by the flow responsive element within the meter 14. It will be understood that the encoded register 16 is comprised of a water tight housing which encloses several digit wheels driven by the meter flow responsive element to indicate the volume of water having flowed through the meter. The position of each digit wheel is sensed by suitable electric circuitry such as that as described in co-pending application for U. S. patent of Bruce Gray, Serial No. 510,753 filed July 1, 1983.

The output of register 16 is electrically connected by means of a waterproof cord 18 to a meter sensor designated generally by the numeral 20 located in the pit cover 22 which is removable or hinged to the top of the pit.

Referring specifically to Figure 2 the sensor assembly 20 is comprised of a housing 30 which in turn is comprised of a face plate 32 which has a downwardly extending tubular extension 34. The tubular extension 34 has an exterior threaded section 36 and projects through an opening 38 in the pit cover 22. A locking nut 40 is threaded onto the threaded section 36 from the inside of the cover 22 so as to clamp the portion of the cover 22 surrounding the opening 38 between face plate 32 and locking nut 40. A passage 44 extends axially through housing 30 and an annular shoulder 42 is formed in the face plate 32 around the upper end of the passage 44. The meter sensor 46 is received within the passage 44 so that its upper end abuts against shoulder 42 in face plate 32 when in place in the assembly. The passage 44 is internally threaded to receive a threaded tube 52 to clamp the sensor 46 between shoulder 42 in face plate 32 and the end of the tube 52.

A circular recess 54 is formed in the upper surface of face plate 32 by uniformly spaced radially extending sloping raised portions 56. The sensor 46 contains an inductive coil sealed within the sensor which is electrically connected to the register 16 (Fig. 1) by means of cord 18.

As shown in Fig. 2 an interrogator sensor 60 is contained within a housing 62 which is mounted on the end of extension 66 by means of a universal joint 64 to facilitate alignment of housing 62 in recess 54. When housing 62 is fully inserted into recess 54 the sensors 46 and 60 will be inductively coupled. The housing 62 is of a size to snugly fit into recess 54 to thereby guide the sensor 60 into a good inductive coupling with sensor 46.

As shown in Figure 1 the extension rod 66 is carried by an individual 68 who takes the meter reading. The individual also carries an interrogator/storage unit 70 which is connected by suitable wiring 72 extending through extension 66 to the coil within the sensor 60.

In order to read the data accumulated by the encoded register 16, the individual 68 merely inserts the housing 62 into the recess 54. He then operates a switch on the handle 65 of the upper end of extension 66 to cause an interrogation signal to be sent through the sensor 60 and sensor 46 to the encoded register 16. Upon receipt of the interrogation signal the encoded register causes a signal to be sent back through sensors 46 and 60 to the interrogation/storage unit 70 which signal contains an identification of the particular meter being interrogated and digital data representative of the volumetric flow through the meter accumulated by the register.

From the foregoing it can be seen that through the use of Applicants' arrangement, readings from pit meter installations may be taken quickly and efficiently without the effort or time required to remove and replace the pit cover 22. Also since the meter sensor 46 is not located on the meter the problem encountered when the pit is inundated by water are avoided. Since the raised portions 56 which form the recess 54 are radially spaced, any moisture which might tend to accumulate in the recess 54 is drained off by way of the spaces between the radially spaced raised portions 56. A considerable amount of dirt may be accumulated in the recess 54 before the interrogator will give a "no read" signal. In such an event, however, the dirt may be easily brushed away to make it possible for a good reading to be obtained.

## Claims

1. A system for reading a utility meter which is located within an enclosure, access to said meter being through an opening normally closed by a movable access panel, said meter having an encoder for accumulating data relating to the flow of fluid through the meter and adapted to produce an electrical output signal representing said data, said system comprising; a first sensor comprised of a first transformer coil electrically connected to said encoder, said sensor being located in said panel and accessible from the exterior thereof, a mobile second sensor exterior to said door and comprised of a second transformer coil electrically connected to an interrogator unit including a data storage means, said second sensor being adapted to be brought into close proximity to said first sensor to establish an inductive coupling between said first and second transformer coils whereby said data may be transferred from said encoder to said interrogator unit through said inductively coupled coils.

2. The system defined in claim 1 in which said enclosure is located within a pit beneath the surface of the ground and said access panel is accessible from the surface of the ground.

3. The system defined in claim 2 in which said second sensor is mounted at one end of an extension rod, a handle having a switch adapted to apply an interrogation signal from said interrogator unit to said second coil being located at the other end of said extension rod.

4. The system defined in claim 2 in which said interrogator unit includes means for generating an interrogation signal which is transmitted through said coils to said encoder and means associated with said encoder responsive to said interrogation signal to cause said encoder to transmit said data through said coils to said storage means in said interrogator unit.

5. A meter sensor assembly for mounting on a wall of an enclosure containing a meter, said wall having an opening therethrough, a sensor housing comprised of a face plate and a tubular extension extending from said face plate and adapted to extend through said opening when said face plate is seated on an exterior surface of said wall, a passageway extending through said extension a shoulder on said face plate circumscribing said passage adjacent the outer end thereof, a locking member secured to the inner portion of said extension which protrudes into the interior of said enclosure to clamp a portion of said wall surrounding said opening between said face plate and said locking member, a meter sensor within said passageway, a tubular member extending into said passageway from the inner end of said tubular extension to clamp said meter sensor between said shoulder and the end of said tubular member.

6. The assembly defined in claim 5 in which a recess is formed in the outer surface of said face plate to receive a guide wall formed on the sensor housing of a portable sensor.

7. The assembly defined in claim 6 in which said recess is formed by angularly spaced raised portions in the outer surface of said face plate, said raised portions extending radially from said recess the space between said raised portions forming channels for draining moisture from said recess.

8. The assembly defined in claim 5 in which a cord extends from said meter sensor through said tubular member, together with a slot in the wall of said tubular member and extending the length thereof to permit passage of said cord through said wall of said tubular member during assembly of said tubular member into said tubular extension.

9. A meter sensor assembly for mounting on a wall of an enclosure containing a meter, said wall having an opening therethrough, a sensor housing comprised of a face plate and a tubular extension extending from said face plate and adapted to extend through said opening when said face plate is seated on an exterior surface of said wall, means for securing said housing on said cover, a chamber within said tubular extension extending from said face plate and communicating with the interior of said enclosure, a meter sensor within said chamber, means to secure said sensor in said chamber proximate said face plate.

10. The assembly defined in claim 9 in which said tubular extension has a threaded portion which extends into the interior of said enclosure and said means for securing said housing on said cover is comprised of a nut threaded on said threaded portion.

11. The assembly defined in claim 10 in which said means to secure said sensor in said chamber is comprised of a tubular member threaded with said chamber the interior of said enclosure to clamp said sensor between said face plate and said tubular member.

FIG. 1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 463 354 (L.M. SEARS) * Figures 1,2A; column 2, lines 28-36; column 3, lines 6-27 * | 1 | G 08 C 23/00 H 04 B 5/00 |
| X,D | EP-A-0 131 732 (ROCKWELL) * Figure 1; page 8, lines 34,35; page 9, lines 1-16 * | 1 | |
| A,D | | 4 | |
| A | EP-A-0 011 991 (E. ALLMAN & CO. LTD.) * Abstract; figure 3 * | 1 | |
| A | US-A-3 549 985 (R.S. PENLAND) * Figure 1 * | 3 | |
| A | DE-A-2 732 626 (NIPPON SOKEN) * Figures 3,4 * | 5-11 | TECHNICAL FIELDS SEARCHED (Int. Cl.4) G 08 C H 04 B G 01 F G 01 V |
| A | US-A-4 500 881 (M.J. BEANE) * Figure 1; column 4, lines 20-52; column 5, lines 3-30 * | 1,5-11 | |

The present search report has been drawn up for all claims

| Place of search | Date of completion of the search | Examiner |
|---|---|---|
| THE HAGUE | 01-10-1987 | NETH C.M.F. |